# FASCICULE DE BREVET EUROPEEN

(11) **EP 2 383 182 B1**
(45) Date de publication et mention de la délivrance du brevet: **13.03.2013**
(21) Numéro de dépôt: 11003410.5
(22) Date de dépôt: 26.04.2011
(51) Int. Cl.: B64C 25/40

(54) **Procédé de gestion d'une liaison au sol d'un aéronef**
Steuerungsverfahren einer Verbindung eines Luftfahrzeugs mit dem Boden
Method for managing a ground link of an aircraft

(30) Priorité: 28.04.2010 FR 1053260
(43) Date de publication de la demande: 02.11.2011
(73) Titulaire: Messier-Bugatti-Dowty, 78140 Velizy Villacoublay (FR)
(72) Inventeur: Sorin, Anthony, 78000 Versailles (FR)
(74) Mandataire: Parzy, Benjamin Alain

(56) Documents cités:
- FR-A1- 2 935 680
- US-A1- 2005 224 642
- US-A1- 2009 218 440

## Description

L'invention concerne un procédé de gestion d'une liaison au sol d'un aéronef. Un tel procédé est connu de US2009/218440, qui represente l'art antérieur le plus proche.

On rappelle que lorsqu'un aéronef est au sol, toutes les roues du train d'atterrissage de l'aéronef sont soumises à des charges statiques. On rappelle également que lors d'une phase de freinage de l'aéronef, l'effort de freinage développable par une roue équipée d'un dispositif de freinage à son interface avec le sol est sensiblement proportionnel à la charge statique à laquelle est soumise la roue. De la même façon, lors d'une phase de déplacement autonome de l'aéronef, l'effort développable par une roue équipée d'un dispositif de déplacement autonome à son interface avec le sol est sensiblement proportionnel à la charge statique à laquelle est soumise la roue.

On rappelle qu'un aéronef comporte un train d'atterrissage, qui comporte plusieurs atterrisseurs, dans le but d'assurer une interface entre l'aéronef et le sol.

### ARRIERE PLAN TECHNOLOGIQUE DE L'INVENTION

Il est connu d'équiper une roue de train d'atterrissage d'un dispositif de freinage. Il est également connu d'équiper une roue de train d'atterrissage d'un dispositif de déplacement autonome comportant principalement un moteur électrique de sorte à pouvoir déplacer l'aéronef au sol sans l'assistance des propulseurs.

De tels dispositifs se révèlent encombrants de sorte qu'il est difficilement possible d'équiper une même roue à la fois d'un dispositif de freinage et d'un dispositif de déplacement autonome. On a ainsi pensé à équiper, sur un atterrisseur, certaines roues de dispositif de freinage et d'autres roues de dispositif de déplacement autonome.

Toutefois, cet arrangement diminue la capacité de freinage de l'aéronef par rapport à un arrangement où l'ensemble des roues seraient uniquement équipées de dispositif de freinage.

De la même façon, cet arrangement présente une moindre capacité de déplacement autonome de l'aéronef, toutes les roues n'étant pas équipées d'un dispositif de déplacement autonome.

Cet inconvénient est encore augmenté lorsque l'état du sol conduit à des coefficients de frottement diminués, par exemple en cas de pluie ou de verglas.

### OBJET DE L'INVENTION

Un but de l'invention est de proposer un procédé de gestion d'une liaison au sol d'un aéronef visant à améliorer la capacité de freinage et la capacité de déplacement autonome d'un aéronef équipé des deux types de dispositifs.

### BREVE DESCRIPTION DE L'INVENTION

En vue de la réalisation de ce but, on propose un procédé de gestion d'une liaison au sol d'un aéronef comportant un train d'atterrissage qui porte des roues soumises à des charges statiques dont certaines sont équipées d'un dispositif de freinage et d'autres sont équipées d'un dispositif de déplacement autonome.

Selon l'invention, le procédé comporte l'étape de provoquer une modification d'une répartition des charges statiques auxquelles sont soumises les roues du train d'atterrissage de sorte à :
- surcharger au moins certaines roues équipées d'un dispositif de freinage lors d'une phase de freinage ;
- surcharger au moins certaines roues équipées d'un dispositif de déplacement autonome lors d'une phase de déplacement autonome.

Ainsi, lors d'une phase de freinage, la charge statique augmente sur chaque roue équipée d'un dispositif de freinage de sorte que l'effort de freinage développable au niveau de chacune de ces roues augmente également. La capacité de freinage de l'aéronef est ainsi augmentée.

Symétriquement, lors d'une phase de déplacement autonome, la charge statique augmente sur chaque roue équipée d'un dispositif de déplacement autonome de sorte que l'effort de traction développable au niveau de chacune de ces roues augmente également. La capacité de déplacement autonome de l'aéronef est ainsi augmentée.

### BREVE DESCRIPTION DES DESSINS

L'invention sera mieux comprise à la lumière de la description qui suit d'un mode de réalisation particulier non limitatif de l'invention en référence aux figures des dessins annexés parmi lesquelles :
- la figure 1 est une vue de dessous schématique d'un aéronef équipé d'un train d'atterrissage mettant en oeuvre le procédé selon l'invention;
- la figure 2 est une représentation schématique de deux atterrisseurs principaux du train d'atterrissage illustré à la figure 1.

### DESCRIPTION DETAILLEE DE L'INVENTION

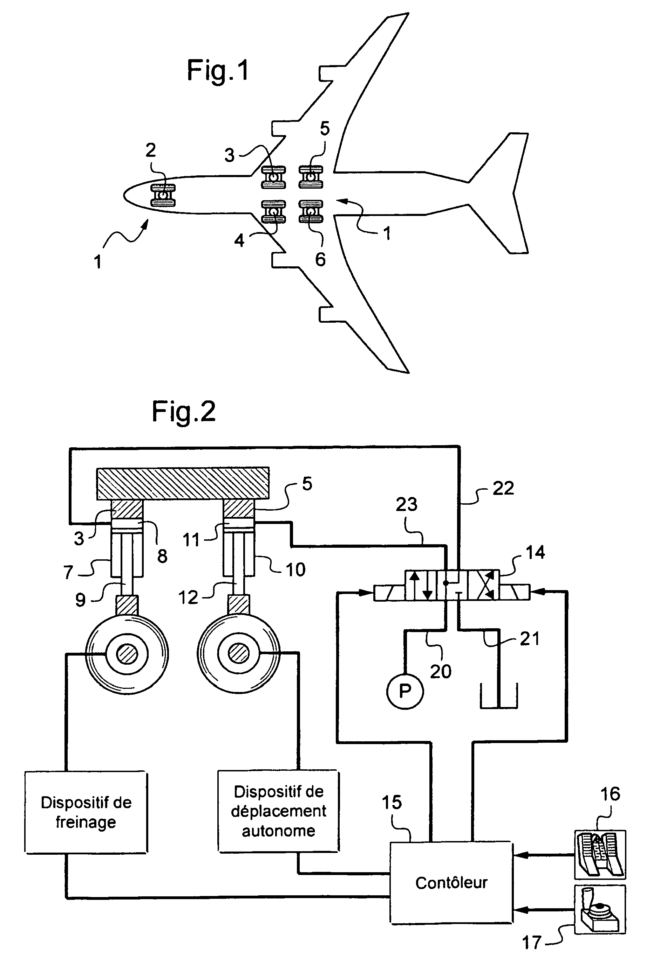

Comme illustré à la figure 1, le procédé de l'invention est ici détaillé en référence à un aéronef comportant un train d'atterrissage 1 qui comprend un atterrisseur auxiliaire 2 à l'avant de l'aéronef, des atterrisseurs principaux avant 3, 4 disposés respectivement à gauche et à droite du fuselage et des atterrisseurs principaux arrière 5, 6 disposés respectivement à gauche et à droite du fuselage. Ici, chaque atterrisseur porte deux roues. Toutes les roues sont soumises à des charges statiques lorsque l'aéronef est au sol, les charges statiques se répartissant sur les roues en fonction de la raideur des atterrisseurs portant lesdites roues mais également en fonction du centrage de l'aéronef.

Le groupe des atterrisseurs principaux avant 3, 4 porte des roues qui sont équipées d'un dispositif de freinage, et le groupe des atterrisseurs principaux arrière 5, 6 porte des roues qui sont équipées d'un dispositif de déplacement autonome. Les dispositifs de freinage et de déplacement autonome étant bien connus de l'art antérieur, ils ne seront pas décrits plus en détail.

Lors d'une phase de freinage, une partie des charges statiques sont naturellement transférées vers l'avant de l'aéronef : la charge statique augmente légèrement sur chacune des roues des atterrisseurs principaux avant 3, 4 équipées d'un dispositif de freinage de sorte que l'effort de freinage développable au niveau de chacune de ces roues augmente également. La capacité de freinage de l'aéronef est ainsi légèrement augmentée. Selon l'invention, on va favoriser encore davantage cette modification naturelle des charges statiques en provoquant une modification de la répartition des charges statiques, au-delà de la modification due au seul freinage, et tendant à surcharger les roues des atterrisseurs principaux avant 3, 4 lors d'une phase de freinage.

Identiquement à une phase de freinage, une partie des charges statiques sont naturellement transférées vers l'arrière ou l'avant de l'aéronef lors d'une phase de déplacement autonome selon que l'on se trouve dans une phase d'accélération ou de décélération. Comme seules les roues des atterrisseurs principaux arrière 5, 6 sont équipées d'un dispositif de déplacement autonome, la répartition naturelle des charges statiques peut donc être légèrement favorable ou légèrement défavorable à la capacité de déplacement autonome de l'aéronef. Selon l'invention, on va favoriser encore davantage la modification naturelle des charges statiques, au moins lorsque les roues des atterrisseurs principaux arrière 5, 6 sont utilisées pour accélérer l'avion, en provoquant une modification de la répartition des charges statiques, au-delà de la modification due au déplacement autonome, et tendant à surcharger les roues des atterrisseurs principaux arrière 5, 6 quelque soit la phase de déplacement autonome.

Comme illustré à la figure 2, l'atterrisseur principal avant gauche 3 comporte un amortisseur comportant un caisson 7 dans lequel une tige coulissante 9 formant piston est montée pour coulisser et définir avec le caisson 7 une chambre d'huile 8. Identiquement, l'atterrisseur principal arrière gauche 5 comporte un amortisseur comportant un caisson 10 dans lequel une tige coulissante 12 formant piston est montée pour coulisser et définir avec le caisson 10 une chambre d'huile 11. L'atterrisseur principal avant droit 4 et l'atterrisseur principal arrière droit 6 comportent également chacun un amortisseur identique à ceux des atterrisseurs principaux gauche avant et arrière 3,5. Les tiges coulissantes des amortisseurs des atterrisseurs principaux 3, 4, 5, 6 portent des essieux qui portent les roues des atterrisseurs.

Selon l'invention, l'aéronef est équipé d'un dispositif de modification des charges statiques comportant ici un distributeur 14, 4 voies - 3 positions, avec 2 voies d'entrée 20, 21 respectivement reliées à une source de pression et à un retour, et deux voies de sortie 22, 23 connectées respectivement aux chambres 8 et 11 des atterrisseurs principaux gauche avant et arrière 3, 5.

Dans la position neutre illustrée ici, les deux voies de sortie 22, 23 sont connectées à la source de pression.

Dans la position de freinage (position de droite), le distributeur 14 met en communication la première voie de sortie 22 avec la première voie d'entrée 20 et la deuxième voie de sortie 23 avec la deuxième voie d'entrée 21 de sorte que la chambre 8 de l'atterrisseur principal avant gauche est reliée à la source de pression et que la chambre 5 de l'atterrisseur principal arrière gauche soit reliée au retour.

Dans la position de déplacement autonome (position de gauche), le distributeur 14 met en communication la première voie de sortie 22 avec la deuxième voie d'entrée 21 et la deuxième voie de sortie 23 avec la première voie d'entrée 20 de sorte que la chambre 8 de l'atterrisseur principal avant gauche est reliée au retour et que la chambre 5 de l'atterrisseur principal arrière gauche soit reliée à la source de pression.

Le dispositif de modification des charges statiques comporte également un contrôleur 15 permettant de commander le distributeur 14 et de le placer sélectivement dans l'une ou l'autre des positions.

Lorsque qu'un ordre de freinage est donné, par exemple par l'intermédiaire de pédales de frein 16, le contrôleur 15 détecte l'ordre et bascule le distributeur 14 dans sa position de freinage, de sorte que de l'huile peut être expulsée de l'atterrisseur principal arrière gauche 5 vers le retour, ce qui a pour effet de le rendre moins raide que l'atterrisseur principal avant gauche 3. La charge statique supportée par l'atterrisseur principal arrière gauche 5 est ainsi diminuée ce qui a pour effet de surcharger l'atterrisseur principal avant gauche 3. La capacité du dispositif de freinage s'en trouve augmentée.

De la même façon, lorsqu'un ordre de déplacement autonome est donné, par exemple par l'intermédiaire de manettes de taxiage 17, le contrôleur 15 détecte l'ordre et bascule le distributeur 14 dans sa position de déplacement autonome, de sorte que de l'huile peut être expulsée de l'atterrisseur principal avant gauche 3 vers le retour, ce qui a pour effet de le rendre moins raide que l'atterrisseur principal arrière gauche 5. La charge statique supportée par l'atterrisseur principal avant gauche 3 est ainsi diminuée ce qui a pour effet de surcharger l'atterrisseur principal arrière gauche 5. La capacité du dispositif de déplacement autonome s'en trouve augmentée.

L'aéronef comporte un deuxième dispositif de modification des charges statiques pour les atterrisseurs principaux droit avant et arrière 4, 6. Le deuxième dispositif est identique au premier dispositif de modification des charges statiques pour les atterrisseurs principaux gauche avant et arrière 3, 5 et fonctionne simultanément avec le premier dispositif.

Bien entendu, l'invention n'est pas limitée au mode de mise en oeuvre décrit et est susceptible de variantes de réalisation sans sortir du cadre de l'invention telle que définie par les revendications.

En particulier, bien que l'on ait indiqué que le train d'atterrissage 1 comportait un atterrisseur auxiliaire à l'avant et quatre atterrisseurs principaux 3, 4, 5, 6 alignés deux à deux sur chaque côté du fuselage, le train pourra bien entendu avoir une toute autre disposition comme par exemple un atterrisseur à l'avant et deux atterrisseurs principaux de fuselage équipés d'un dispositif de déplacement autonome et deux atterrisseurs principaux de voilure équipés de freins. En outre, le train d'atterrissage 1 pourra comporter un tout autre nombre d'atterrisseurs et chaque atterrisseur pourra comporter un tout autre nombre de roues.

Bien qu'ici les roues de l'atterrisseur principal avant gauche 3 et de l'atterrisseur principal arrière gauche 5 soient déchargées par un unique dispositif de modification des charges statiques, on pourra prévoir de décharger les roues du premier atterrisseur principal avant gauche 3 et du premier atterrisseur principal arrière gauche 5 par un dispositif de modification des charges statiques comportant autant de distributeurs que d'atterrisseurs principaux.

Bien que l'on ait indiqué que la modification de la répartition des charges statiques était réalisée en modifiant la raideur des atterrisseurs principaux 3, 4, 5, 6, par modification de la pression des amortisseurs des atterrisseurs principaux 3, 4, 5, 6, on pourra utiliser d'autres moyens pour réaliser cette modification de raideur comme notamment utiliser dans les atterrisseurs principaux avant et arrière, s'ils en sont équipés, les dispositifs de baraquage. Les roues des atterrisseurs principaux avant ou les roues des atterrisseurs principaux arrière seront ainsi surchargées en actionnant les dispositifs de baraquage des atterrisseurs principaux avant ou des atterrisseurs principaux arrière. On pourra également faire varier la pression d'air dans les amortisseurs, ou encore dégonfler sélectivement les pneumatiques des roues.

## Revendications

1. Procédé de gestion d'une liaison au sol d'un aéronef comportant un train d'atterrissage (1) qui porte des roues soumises à des charges statiques dont certaines sont équipées d'un dispositif de freinage et d'autres sont équipées d'un dispositif de déplacement autonome, le procédé étant **caractérisé en ce qu'**il comporte l'étape de provoquer une modification d'une répartition des charges statiques auxquelles sont soumises les roues du train d'atterrissage de sorte à :
- Surcharger au moins certaines roues équipées d'un dispositif de freinage lors d'une phase de freinage ;
- Surcharger au moins certaines roues équipées d'un dispositif de déplacement autonome lors d'une phase de déplacement autonome.

2. Procédé selon la revendication 1, appliqué à un aéronef sur lequel les roues équipées d'un dispositif de freinage sont portées par un premier groupe d'atterrisseurs (3, 4) tandis que les roues équipées d'un dispositif de déplacement autonome sont portées par un deuxième groupe d'atterrisseurs (5, 6), dans lequel on surcharge les roues de l'un ou de l'autre des groupes d'atterrisseurs en modifiant au moins un paramètre de fonctionnement des amortisseurs des atterrisseurs d'au moins l'un des groupes d'atterrisseurs.

3. Procédé selon la revendication 2, dans lequel, lors d'une phase de freinage, on modifie au moins un paramètre fonctionnel des amortisseurs (10) du groupe d'atterrisseurs (5, 6) dont les roues sont équipées d'un dispositif de déplacement autonome pour diminuer une raideur de ces amortisseurs, tandis que, lors d'une phase de déplacement autonome, on modifie au moins un paramètre de fonctionnement des amortisseurs (7) du groupe d'atterrisseurs (3, 4) dont les roues sont équipées d'un dispositif de freinage pour diminuer une raideur de ces amortisseurs.

4. Procédé selon la revendication 1, appliqué à un aéronef sur lequel les roues équipées d'un dispositif de freinage sont portées par un premier groupe d'atterrisseurs (3, 4) tandis que les roues équipées d'un dispositif de déplacement autonome sont portées par un deuxième groupe d'atterrisseurs (5, 6), dans lequel les atterrisseurs des deux groupes comportent un dispositif de baraquage, et dans lequel on surcharge les roues de l'un ou de l'autre des groupes d'atterrisseurs en actionnant les dispositifs de baraquage des atterrisseurs d'au moins l'un des groupes d'atterrisseurs.

## Claims

1. A method of managing a ground connection of an aircraft having landing gear (1) with wheels that are subjected to static loads, some of which wheels are fitted with respective braking devices and others are fitted with respective independent drive devices, the method being **characterized in that** it comprises the step of causing a modification to a distribution of the static loading to which the wheels of the landing gear are subjected in such a manner as to:
• increase the loading on at least some wheels fitted with respective braking devices, during a braking stage; and
• increase the loading on at least some wheels fitted with respective independent drive devices, during an independent drive stage.

2. A method according to claim 1, applied to an aircraft in which the wheels fitted with braking devices are carried by a first group of undercarriages (3, 4) while the wheels fitted with independent drive devices are carried by a second group of undercarriages (5, 6), wherein extra loading is applied to the wheels of one or the other of the groups of undercarriages by modifying at least one operating parameter of the shock absorbers of the undercarriages of at least one of the groups of undercarriages.

3. A method according to claim 2, wherein, during a braking stage, at least one functional parameter of the shock absorbers (10) of the group of undercarriages (5, 6) having wheels that are fitted with independent drive devices is modified in order to reduce a stiffness of said shock absorbers, whereas during an independent drive stage, at least one operating parameter of the shock absorbers (7) of the group of undercarriages (3, 4) having wheels fitted with braking devices is modified in order to reduce a stiffness of said shock absorbers.

4. A method according to claim 1, applied to an aircraft where the wheels fitted with braking devices are carried by a first group of undercarriages (3, 4) while the wheels fitted with independent drive devices are carried by a second group of undercarriages (5, 6), wherein the undercarriages of both groups include kneeling devices, and wherein extra loading is applied to the wheels of one or the other of the groups of undercarriages by operating the kneeling devices of the undercarriages of at least one of the groups of undercarriages.

## Patentansprüche

1. Steuerungsverfahren einer Verbindung eines Luftfahrzeugs mit dem Boden, wobei das Luftfahrzeug ein Fahrgestell (1) umfasst, das die Räder trägt, die statischen Lasten ausgesetzt sind, und wobei bestimmte Räder mit einer Bremsvorrichtung und andere Räder mit einer Vorrichtung zum autonomen Vortrieb ausgestattet sind, wobei das Verfahren **dadurch gekennzeichnet ist, dass** es den Schritt umfasst, eine Änderung einer Verteilung der statischen Lasten, der die Räder des Fahrgestells ausgesetzt sind, so zu bewirken, dass
- zumindest bestimmte mit einer Bremsvorrichtung ausgestattete Räder während einer Bremsphase höher belastet werden;
- zumindest bestimmte mit einer Vorrichtung zum autonomen Vortrieb ausgestattete Räder während einer Phase des autonomen Vortriebs höher belastet werden.

2. Verfahren nach Anspruch 1, das angewandt wird bei einem Luftfahrzeug, bei dem die mit einer Bremsvorrichtung ausgestatteten Räder von einer ersten Fahrgestellgruppe (3, 4) getragen werden, während die mit einer Vorrichtung zum autonomen Vortrieb ausgestatteten Räder von einer zweiten Fahrgestellgruppe (5, 6) getragen werden, bei der die Räder der einen oder der anderen Fahrgestellgruppe höher belastet werden, indem mindestens ein Betriebsparameter der Stoßdämpfer des Fahrgestells mindestens einer der Fahrgestellgruppen modifiziert wird.

3. Verfahren nach Anspruch 2, bei dem während einer Bremsphase mindestens ein Betriebsparameter der Stoßdämpfer (10) der Fahrgestellgruppe (5, 6), bei der die Räder mit einer Vorrichtung zum autonomen Vortrieb ausgestattet sind, modifiziert wird, um eine Steifheit dieser Stoßdämpfer zu reduzieren, wohingegen, während einer Phase des autonomen Vortriebs mindesten ein Betriebsparameter der Stoßdämpfer (7) der Fahrgestellgruppe (3, 4), bei der die Räder mit einer Bremsvorrichtung ausgestattet sind, modifiziert wird, um eine Steifheit dieser Stoßdämpfer zu reduzieren.

4. Verfahren nach Anspruch 1, das angewandt wird bei einem Luftfahrzeug, bei dem die mit einer Bremsvorrichtung ausgestatteten Räder von einer ersten Fahrgestellgruppe (3, 4) getragen werden, während die mit einer Vorrichtung zum autonomen Vortrieb ausgestatteten Räder von einer zweiten Fahrgestellgruppe (5, 6) getragen werden, bei der die Fahrgestelle der zwei Gruppen eine Absenkvorrichtung aufweisen, und bei der die Räder der einen oder der anderen Fahrgestellgruppe höher belastet werden, indem die Absenkvorrichtungen der Fahrgestelle mindestens einer der Fahrgestellgruppen betätigt werden.
